# EUROPÄISCHE PATENTANMELDUNG

(11) **EP 1 403 695 A1**
(43) Veröffentlichungstag der Anmeldung: **31.03.2004**
(21) Anmeldenummer: 02021170.2
(22) Anmeldetag: 24.09.2002
(51) Int. Cl.: G03B 21/20, G03B 27/54, G02B 3/00, G02B 27/09, G02B 27/00, G02B 27/18, H04N 9/31

(54) **Vorrichtung zum Aufbelichten einer Vorlage mittels einer Vielzahl homogenisierter und überlagerter Punktlichtquellen**

(71) Anmelder: Agfa-Gevaert AG, 51373 Leverkusen (DE)
(72) Erfinder: Gressierer, Bernhard, 85276 Pfaffenhofen (DE); Lind, Martin, 80809 München (DE); Thoma, Ralph, 86167 Augsburg (DE); Bode, Andreas, 81476 München (DE); Melzer, Volker, 81671 München (DE)

(57) **Zusammenfassung**

Die Erfindung betrifft eine Vorrichtung zum Aufbelichten einer Vorlage eines Bildes auf eine lichtempfangende Anordnung (34) oder ein lichtempfindliches Material. Die Vorrichtung hat mindestens eine Lichtquelle (12) aus einer Vielzahl Punktlichtquellen (14) zum Generieren von Lichtstrahlen (36), welche zum Abbilden des Bildes (30) entlang einer optischen Hauptachse (A) durch die Vorlage (28) verlaufen, sowie eine Abbildungsoptik (32) zum Projizieren der die Vorlage (28) abbildenden Lichtstrahlen (36) auf die lichtempfangende Anordnung (34) oder das lichtempfindliche Material. Zwischen der Lichtquelle (12) und der Vorlage (28) ist eine optische Einrichtung (16) zum homogenen Ausleuchten der Vorlage (28) angeordnet, die in Abstrahlrichtung der Punktlichtquellen (14) gesehen entlang der optischen Hauptachse (A) angeordnet ein erstes Mikrolinsen-Array (18), ein diesem nachgeordnetes zweites Mikrolinsen-Array (24) sowie einen zwischen dem zweiten Mikrolinsen-Array (24) und der Vorlage (28) angeordneten Feldlinse (26) aufweist.

## Beschreibung

Die Erfindung betrifft eine Vorrichtung nach dem Oberbegriff des Anspruchs 1 zum Aufbelichten einer Vorlage eines Bildes auf eine lichtempfangende Anordnung oder ein lichtempfindliches Material.

Vorrichtungen der eingangs genannten Art sind im Stand der Technik bekannt und werden dazu verwendet, Vorlagen eines Bildes auf eine lichtempfangende Anordnung, wie eine CCD-Anordnung oder eine Projektionsfläche, oder ein lichtempfindliches Material, wie ein Fotopapier aufzubelichten. Als Vorlage dienen entweder Bildvorlagen auf entwickelten Negativfilmen oder die Vorlage wird in einer transmissiven Einrichtung, beispielsweise einer LCD-Einrichtung, einer DMD-Einrichtung oder einem vergleichbaren Lichtmodulator, durch Bilddaten erzeugt.

Um eine möglichst hohe Bildqualität beim Aufbelichten der Vorlage zu erreichen, ist es von besonderer Wichtigkeit, dass die Vorlage von der Lichtquelle der Vorrichtung über deren gesamte Fläche, insbesondere auch in den Randbereichen, möglichst homogen ausgeleuchtet wird.

Zu diesem Zweck sind im Stand der Technik verschiedenste Lichtquellen bekannt, mit denen eine möglichst homogene Ausleuchtung der Vorlage erreicht werden soll.

So wird z. B. bei der sogenannten Abbeschen Beleuchtung die Lichtquelle direkt auf die auszuleuchtende Vorlage abgebildet. Für eine homogene Beleuchtung ist hierzu jedoch eine homogene Lichtquelle notwendig.

Des Weiteren sind aus dem Stand der Technik Vorrichtungen zum Aufbelichten einer Vorlage eines Bildes bekannt, bei denen die Lichtquelle aus einer Vielzahl beabstandeter Punktlichtquellen zum Generieren der Lichtstrahlen gebildet ist und das von den Punktlichtquellen abgestrahlte Licht in einer optischen Einrichtung homogenisiert wird.

So offenbart die EP 0 691 568 A1 eine Vorrichtung zum Aufbelichten einer Bildvorlage, bei der eine Lichtquelle aus einer Vielzahl Punktlichtquellen verwendet wird. Als Punktlichtquellen werden hierbei LEDs eingesetzt, die in einer gemeinsamen Matrix angeordnet sind und Licht unterschiedlicher Wellenlängen abstrahlen, so dass das emittierte Licht in den Grundfarben Blau, Grün und Rot abgegeben wird. Unmittelbar vor den Punktlichtquellen ist eine Streuscheibe angeordnet, mit der das von den Punktlichtquellen emittierte Licht homogenisiert wird. In Strahlungsrichtung der Lichtquelle der Vorlage nachgeordnet ist eine Abbildungsoptik vorgesehen, mit der das-die Vorlage abbildende Licht auf das Fotopapier projiziert wird.

Aus der JP 11 282 092 A ist eine Vorrichtung zum Aufbelichten einer Vorlage bekannt, bei der gleichfalls eine Lichtquelle mit einer Vielzahl Punktlichtquellen eingesetzt wird. Bei dieser bekannten Vorrichtung sind die Punktlichtquellen jedoch gruppenweise zusammengefasst, wobei der Abstrahlwinkel einzelner oder zu Gruppen zusammengefasster Punktlichtquellen einstellbar ist, um eine Durchmischung des Lichtes auf der Vorlage zu erreichen. Das die Vorlage abbildende Licht wird dann mit Hilfe einer Abbildungsoptik auf ein Fotopapier projiziert.

In der EP 1 158 760 A1 ist eine fotografische Erfassungsvorrichtung beschrieben, bei der mehrere Lichtquellen, die jeweils aus einer Vielzahl Punktlichtquellen gebildet sind, in eine optische Einrichtung einstrahlen, in der das von den Lichtquellen abgestrahlte Licht homogenisiert und durch eine Vorlage auf eine lichtempfangende Anordnung projiziert wird. Die optische Einrichtung weist zu diesem Zweck eine Ulbricht-Kugel auf, in der das von den verschiedenen Lichtquellen abgestrahlte, unterschiedlich farbige Licht homogenisiert und durch die Vorlage auf die lichtempfangende Anordnung projiziert wird.

Die im Stand der Technik vorgeschlagene Verwendung von Streuscheiben hat den Nachteil, dass derartige Streuscheiben naturgemäß viel Licht absorbieren, so dass für eine ausreichende Aufbelichtung der Vorlage entsprechend leistungsstarke Punktlichtquellen eingesetzt werden müssen.

Der Einsatz einstellbarer Punktlichtquellen, so wie sie in der JP 11 282 092 A vorgeschlagen werden, hat den Nachteil, dass die zum unabhängigen Einstellen der Punktlichtquellen erforderlichen Vorrichtungen um so aufwändiger sind, je größer die Anzahl unabhängig voneinander einstellbarer Punktlichtquellen ist. Darüber hinaus müssen die einzelnen Punktlichtquellen sehr genau zueinander eingestellt werden, damit eine möglichst gleichmäßige und homogene Ausleuchtung der Vorlage sichergestellt werden kann.

Es ist Aufgabe der Erfindung, eine Vorrichtung der eingangs genannten Art zum Aufbelichten einer Vorlage eines Bildes auf eine lichtempfangende Anordnung oder ein lichtempfindliches Material so weiterzubilden, dass mit verhältnismäßig geringem Aufwand unter Verwendung von beabstandeten Punktlichtquellen eine besonders homogene Ausleuchtung der Vorlage möglich ist.

Diese Aufgabe wird erfindungsgemäß durch eine Vorrichtung mit den Merkmalen nach Anspruch 1 gelöst.

Bei der erfindungsgemäßen Anordnung wird das von den Punktlichtquellen emittierte Licht mit Hilfe des ersten Mikrolinsen-Arrays erfasst, gebündelt und auf das diesem nachgeordnete zweite Mikrolinsen-Array projiziert. Das erste Mikrolinsen-Array bildet dabei eine apperturteilende Optik aneinandergesetzter einzelner Linsen, die von den einzelnen Punktlichtquellen homogen ausgeleuchtet werden. Das erste Mikrolinsen-Array stellt also gewissermaßen eine gleichmäßig leuchtende Lichtquelle dar, die die inhomogene Lichtquelle aus Punktlichtquellen und nicht emittierenden Zwischenräumen zwischen den Punktlichtquellen ersetzt. Dabei wird das in einen größeren Raumwinkel abgestrahlte Licht der Punktlichtquellen auf die Vorlage gerichtet. Hierdurch lässt sich eine besonders gute Lichtausbeute erreichen, wobei die effiziente Nutzung des von den Punktlichtquellen emittierten Lichtes auf der Ausbildung und Anordnung des als aperturteilende Optik wirkenden ersten Mikrolinsen-Arrays basiert.

Die homogen ausgeleuchteten Mikrolinsen des ersten Mikrolinsen-Arrays werden dann von den Mikrolinsen des zweiten Mikrolinsen-Arrays in die Eintrittspupille der Feldlinse vollflächig abgebildet. Das zweite Mikrolinsen-Array bewirkt dabei, dass sich die Bilder des ersten Mikrolinsen-Arrays auf der Vorlage bzw. der Feldlinse überlagern. Durch die Überlagerung der Bilder des ersten Mikrolinsen-Arrays wird das Licht vollständig homogenisiert, so dass das von der Feldlinse ausgehende Licht die der Feldlinse in Abstrahlrichtung nachfolgende Vorlage des Bildes mit hoher Homogenität ausleuchtet. Mit Hilfe der erfindungsgemäßen optischen Einrichtung wird somit auf verhältnismäßig einfache Weise eine sehr effiziente Nutzung des von den Punktlichtquellen emittierten Lichtes bei einer gleichzeitig sehr hohen Homogenisierung des Lichtes erreicht, indem ausschließlich die lichtemittierenden Flächen zur Beleuchtung der Vorlage abgebildet werden.

Gemäß einer bevorzugten Ausführungsform der erfindungsgemäßen Vorrichtung wird vorgeschlagen, dass die Anzahl der Punktlichtquellen der Anzahl der Mikrolinsen des ersten Mikrolinsen-Arrays und der Anzahl der Mikrolinsen des zweiten Mikrolinsen-Arrays entspricht, wobei jeder Punktlichtquelle eine der Mikrolinsen des ersten Mikrolinsen-Arrays und einer der Mikrolinsen des zweiten Mikrolinsen-Arrays zugeordnet ist. Durch diese eindeutige Zuordnung jeder Punktlichtquelle zu jeweils einer der Mikrolinsen des ersten bzw. zweiten Mikrolinsen-Arrays lässt sich ein Aufbau erreichen, bei dem tatsächlich nur die Bereiche der jeweils abzubildenden Punktlichtquelle erfasst werden, die tatsächlich Licht emittieren (bei LEDs der lichtemittierende Chip, während die nichtemittierenden Zwischenräume zwischen den Punktlichtquellen (z. B. Bondbereiche) gezielt ausgeblendet werden.

Um die Überlagerung des von den einzelnen Punktlichtquellen abgestrahlten Lichtes in der Feldlinse besonders vorteilhaft zu erreichen, wird bei einer Weiterbildung der zuvor beschriebenen Ausführungsform vorgeschlagen, den Abstand der optischen Achsen jeweils benachbarter Punktlichtquellen größer zu gestalten als den Abstand der optischen Achsen der diesen Punktlichtquellen jeweils zugeordneten Mikrolinsen des ersten Mikrolinsen-Arrays. Hierdurch wird erreicht, dass die Mikrolinsen des ersten Mikrolinsen-Arrays die Abbildungen der einzelnen Punktlichtquellen gerichtet in die diesen jeweils zugeordneten Mikrolinsen des zweiten Mikrolinsen-Arrays leiten und das Licht jener Punktlichtquellen, die nicht auf der optischen Hauptachse positioniert sind, dennoch auf die Vorlage gelenkt wird, wodurch auch in Randbereichen die Vorlage homogen ausgeleuchtet wird.

Des Weiteren wird vorgeschlagen, auch den Abstand der optischen Achsen jeweils benachbarter Mikrolinsen der ersten Mikrolinsen-Arrays größer zu gestalten als den Abstand der optischen Achsen der diesen Mikrolinsen jeweils zugeordneten Mikrolinsen des zweiten Mikrolinsen-Arrays. Hierdurch wird die Überlagerung des von den Punktlichtquellen abgestrahlten Lichtes erreicht, wodurch die Lichtverluste sehr gering gehalten werden.

Bei einer weiteren bevorzugten Ausführungsform der erfindungsgemäßen Vorrichtung wird vorgeschlagen, den Abstand des ersten Mikrolinsen-Arrays zu den Punktlichtquellen, die Brennweiten der Mikrolinsen des ersten Mikrolinsen-Arrays sowie den Abstand des zweiten Mikrolinsen-Arrays zum ersten Mikrolinsen-Array so zu wählen, dass jede Punktlichtquelle, die dieser jeweils zugeordnete Mikrolinse des zweiten Mikrolinsen-Arrays vollflächig ausleuchtet. Auf diese Weise werden die Lichtverluste minimiert, wodurch sich auf einfache und effektive Weise eine hohe Lichtleistungsdichte und eine gerichtete, homogene Beleuchtung der Vorlage ergibt. Gleichzeitig wird durch das zueinander Einstellen der beiden Mikrolinsen-Arrays die inhomogene Abstrahl-Charakteristik der Punktlichtquellen homogenisiert und die Beleuchtung optimal an die Anforderung des Abbildungsstrahlenganges angepasst.

Des Weiteren wird vorgeschlagen, den Abstand des zweiten Mikrolinsen-Arrays zur Eintrittspupille der Feldlinse so zu wählen, dass sich die von den Mikrolinsen des zweiten Mikrolinsen-Arrays auf die Eintrittspupille der Feldlinse abzubildenden Mikrolinsen des ersten Mikrolinsen-Arrays vollständig überlagern. Hierdurch wird eine Überlagerung der übertragenen Lichtleistung der einzelnen Punktlichtquellen in der Vorlage und durch das gesamte optische System erreicht.

Als Lichtquelle wird vorzugsweise ein LED-Array mit einer Vielzahl vorzugsweise flächenmäßig in einer Ebene angeordneter LEDs verwendet. So zeichnen sich LEDs durch eine lange Lebensdauer, schnelle Schaltbarkeit und eine hohe Lichtleistungsdichte aus. Gleichzeitig können LEDs eingesetzt werden, die Licht unterschiedlicher Wellenlängen abstrahlen, um die Vorlage mit Licht bestimmter Wellenlängenbereiche auszuleuchten. Bei Anwendungen, bei denen eine höhere Lichtintensität vonnöten ist (z. B. bei Projektoren) dienen Laserdioden als Lichtquellen.

Bei einer besonders bevorzugten Ausführungsform der erfindungsgemäßen Vorrichtung ist mindestens eine weitere Lichtquelle aus einer Vielzahl Punktlichtquellen vorgesehen. Die optische Einrichtung hat für diese weitere Lichtquelle gleichfalls ein erstes Mikrolinsen-Array und ein zweites Mikrolinsen-Array, um die zuvor beschriebenen Wirkungen für eine Bündelung der von den Punktlichtquellen abgestrahlten Lichtstrahlen zu erreichen. Des weiteren ist die optische Einrichtung mit einer optischen Ablenkeinrichtung ausgestattet, welche die von den beiden zweiten Mikrolinsen-Arrays der beiden Lichtquellen abgestrahlten Lichtstrahlen in die Eintrittspupille der Feldlinse lenkt. Durch die Verwendung mindestens einer weiteren Lichtquelle ist es möglich, die Vorlage mit Licht unterschiedlicher Wellenlängenbereiche zu bestrahlen und das Licht aus definierten, vorgegebenen Wellenlängenbereichen zusammenzusetzen.

Dies wäre auch erreichbar, indem innerhalb eines Arrays LEDs unterschiedlicher Abstrahlwellenlängen verwendet würden. Allerdings wäre in diesem Fall eine zusätzliche Filterung aufwändiger, da unterschiedliche Filter für jede LED zu verwenden wären, was z. B. Mosaikfilter gewährleisten.

Die Ablenkungseinrichtung der mehreren Lichtquellen weist vorzugsweise einen Strahlenkombinierer zum Kombinieren der von den beiden Lichtquellen emittierten Lichtstrahlen sowie mindestens einen Reflektor auf, mit dem die von dem Strahlenkombinierer kombinierten Lichtstrahlen in die Feldlinse umgelenkt werden.

Bei einer bevorzugten Weiterbildung dieser Ausführungsform sind insgesamt drei Lichtquellen mit jeweils zugeordneten ersten und zweiten Mikrolinsen-Arrays vorgesehen, wobei die Punktlichtquellen der ersten Lichtquelle blaues Licht, die Punktlichtquellen der zweiten Lichtquelle grünes Licht und die Punktlichtquellen der dritten Lichtquelle rotes Licht emittieren.

Ferner ist es bei der mit mehreren Lichtquellen ausgestatteten Ausführungsform von Vorteil, wenn in Abstrahlrichtung der Lichtquellen gesehen zwischen dem zweiten Mikrolinsen-Array und der optischen Ablenkungseinrichtung jeweils eine Filteranordnung zum Ausfiltern vorgegebener Wellenlängenbereiche angeordnet ist. Hierdurch können gezielt bestimmte Farbanteile ausgefiltert werden, die beim Abbilden der Vorlage auf die lichtempfangende Anordnung bzw. das lichtempfindliche Material unerwünscht sind.

Wird bei der zuvor beschriebenen Ausführungsform, die mit mehreren Lichtquellen ausgestattet ist, die Vorlage für eine digitale Weiterverarbeitung auf eine lichtempfangende Anordnung projiziert, so ist es besonders von Vorteil, wenn der Abbildungsoptik in Strahlrichtung gesehen eine Prismenoptik nachgeordnet ist, welche das auf sie geleitete Licht in die Farbbestandteile der drei Grundfarben Blau, Grün und Rot aufspaltet und auf für jede Grundfarbe eigens vorgesehene lichtempfangende Anordnungen lenkt. Auf diese Weise können in einem einzigen Belichtungsvorgang die verschiedenen Farbbestandteile der Vorlage entsprechend den drei Grundfarben Blau, Grün und Rot aufgespalten und gezielt auf die der jeweiligen Grundfarbe zugeordnete lichtempfangende Anordnung projiziert werden.

Eine derartige Prismenoptik kann grundsätzlich jedoch auch für eine Vorrichtung eingesetzt werden, bei der eine einzige Lichtquelle mit Punktlichtquellen verwendet wird, welche Licht unterschiedlicher Wellenlängenbereiche abstrahlen.

Falls mehr Zeit zur Verfügung steht, ist es auch möglich, nur eine lichtempfangende Anordnung zu verwenden und die Beleuchtung der Vorlage sequentiell, also eine Farbe nach der anderen, vorzunehmen.

Als lichtempfangende Anordnung wird vorzugsweise die Verwendung eines CCD-Arrays vorgeschlagen, das eine ausreichend hohe Auflösung für die Vorlage des Bildes aufweist.

Um eine möglichst platzsparenden Aufbau zu realisieren, wird die Verwendung eines telezentrischen Objektivs als Abbildungsoptik als besonders vorteilhaft angesehen.

Als lichtempfangende Anordnung kann auch eine Projektionsleinwand o. Ä. dienen. Um die erfindungsgemäße Aufbelichtungsvorrichtung zur Projektion digitaler Bilder oder Filme, etc. nutzen zu können, werden aber vorzugsweise Laserdioden (z. B. Halbleiterlaser) als Punktlichtquellen verwendet, da diese lichtstärker sind als LEDs.

Weitere Merkmale und Vorteile der Erfindung ergeben sich aus der folgenden Beschreibung zweier bevorzugter Ausführungsbeispiele, wobei Bezug auf die beigefügten Zeichnungen genommen wird.

### Es zeigen:

- Fig. 1: eine schematische Darstellung eines ersten Ausführungsbeispiels einer erfindungsgemäßen Vorrichtung zum Aufbelichten einer Vorlage eines Bildes auf eine lichtempfangende Anordnung;
- Fig. 2: eine vergrößerte schematische Darstellung einer Anordnung aus einer Lichtquelle mit zwei zugeordneten Mikrolinsen-Arrays; und
- Fig. 3: eine schematische Darstellung eines zweiten Ausführungsbeispiels einer erfindungsgemäßen Vorrichtung zum Aufbelichten, bei der insgesamt drei Lichtquellen vorgesehen sind, die jeweils Licht unterschiedlicher Wellenlängenbereiche emittieren.

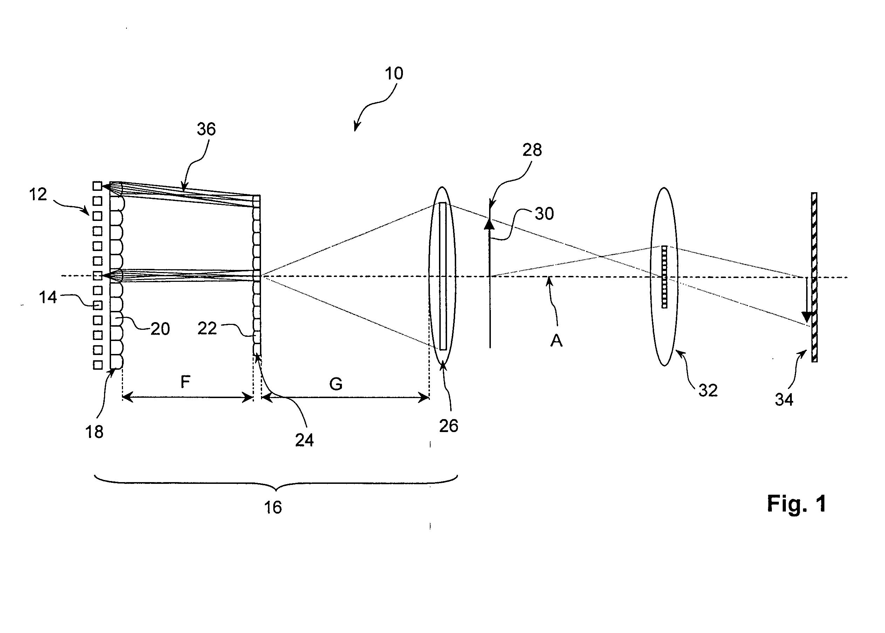

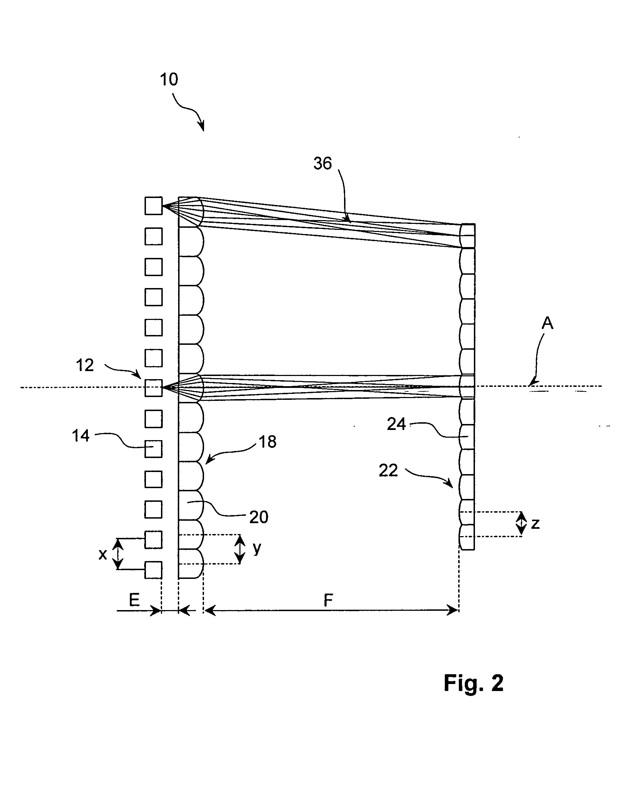

Fig. 1 zeigt in schematischer Darstellung eine erfindungsgemäße Vorrichtung 10, mit der eine Bildvorlage auf eine lichtempfangende Anordnung oder ein lichtempfindliches Material aufbelichtet werden kann. Die Vorrichtung 10 weist hierzu eine Lichtquelle 12 mit einer Vielzahl flächenmäßig in einer Ebene mit gleichem Abstand nebeneinander in einer Matrix angeordneter Punktlichtquellen 14 auf. In Abstrahlrichtung den Punktlichtquellen 14 nachgeordnet ist eine optische Einrichtung 16, deren Aufbau nachfolgend unter Bezugnahme auf Fig. 2 näher erläutert wird.

Die optische Einrichtung 16 weist ein erstes Mikrolinsen-Array 18 auf, das aus einer Vielzahl unmittelbar nebeneinander in einer Matrix angeordneter Mikrolinsen 20 gebildet ist. Die Anzahl der Mikrolinsen 20 entspricht dabei der Anzahl der Punktlichtquellen 14 der Lichtquelle 12, wobei jeder Punktlichtquelle 14 eine bestimmte Mikrolinse 20 des ersten Mikrolinsen-Arrays 18 zugeordnet ist.

Der Abstand x der optischen Achsen jeweils benachbarter Punktlichtquellen 14 ist dabei größer als der Abstand y der optischen Achsen, der diesen Punktlichtquellen 14 jeweils zugeordneten Mikrolinsen 20 des ersten Mikrolinsen-Arrays 18. Durch diese Art der Anordnung der Mikrolinsen 20 des ersten Mikrolinsen-Arrays 18 relativ zu den Punktlichtquellen 14 der Lichtquelle 12 wird erreicht, dass das von jeder Punktlichtquelle 14 abgestrahlte Licht einerseits von der dieser jeweils zugeordneten Mikrolinse 20 gebündelt und, sofern die Punktlichtquelle nicht unmittelbar auf der optischen Hauptachse A angeordnet ist, geringfügig in Richtung der optischen Achse A umlenkt wird, wodurch das Licht der Punktlichtquellen 14 gebündelt wird. Gleichzeitig wird durch diese Art der Anordnung erreicht, dass nur die lichtemittierenden Abschnitte der Punktlichtquellen 14 weitergeleitet werden, während die nichtemittierenden Zwischenräume der Lichtquelle 12, die zwischen den Punktlichtquellen 14 ausgebildet sind, ausgeblendet werden.

Beabstandet zum ersten Mikrolinsen-Array 18 ist ein zweites Mikrolinsen-Array 24 vorgesehen, das gleichfalls aus einer Vielzahl flächenmäßig in einer Ebene nebeneinander in einer Matrix angeordneten Mikrolinsen 22 gebildet ist. Auch hier entspricht die Anzahl der Mikrolinsen 22 der Anzahl der Punktlichtquellen 14 bzw. der Anzahl der Mikrolinsen 20 des ersten Mikrolinsen-Arrays 18. Die Mikrolinsen 22 des zweiten Mikrolinsen-Arrays 24 sind mit einer geringeren Rasterung zueinander angeordnet als die Mikrolinsen 20 des ersten Mikrolinsen-Arrays 18, so dass der Abstand z zwischen den optischen Achsen unmittelbar benachbarter Mikrolinsen 22 des zweiten Mikrolinsen-Arrays 24 geringer ist als der Abstand y zwischen unmittelbar benachbarten Mikrolinsen 20 des ersten Mikrolinsen-Arrays 18. Auf diese Weise wird eine weitere Bündelung des von den einzelnen Punktlichtquellen 14 abgestrahlten Lichtes erreicht.

Damit eine möglichst vollständige Ausleuchtung der Mikrolinsen 22 des zweiten Mikrolinsen-Arrays 24 erfolgt, sind der Abstand E des ersten Mikrolinsen-Arrays 18 zu den Punktlichtquellen 14, die Brennweiten der Mikrolinsen 20 des ersten Mikrolinsen-Arrays 18 sowie der Abstand F des zweiten Mikrolinsen-Arrays 24 zum ersten Mikrolinsen-Array 18 so gewählt, dass jede Punktlichtquelle 14 die dieser jeweils zugeordnete Mikrolinse 22 des zweiten Mikrolinsen-Arrays 24 vollflächig ausleuchtet.

Wie Fig. 1 weiter zeigt, weist die optische Einrichtung 16 ferner eine Feldlinse 26 auf, die das von den Mikrolinsen 22 des zweiten Mikrolinsen-Arrays 24 abgestrahlte Licht erfasst und die in Strahlungsrichtung gesehen unmittelbar nach der Feldlinse 26 angeordnete Vorlage 28, die in einer Bühne 30 gehalten ist, vollflächig ausleuchtet. Der Abstand G der Feldlinse 26 zum zweiten Mikrolinsen-Array 24 ist dabei so gewählt, dass sich die von den Mikrolinsen 22 des zweiten Mikrolinsen-Arrays 24 auf die Eintrittspupille der Feldlinse 26 abzubildenden Mikrolinsen 20 des ersten Mikrolinsen-Arrays 18 in der Eintrittspupille der Feldlinse 26 zumindest annähernd vollständig überlagern.

Der Vorlage 28 nachgeordnet ist eine Abbildungsoptik 32, beispielsweise in Form eines telezentrischen Objektivs, die das durch die Vorlage 28 von der Feldlinse 26 abgestrahlte Licht auf eine lichtempfindliche Anordnung 34, beispielsweise einem CCD-Array, abbildet.

Durch die erfindungsgemäße optische Einrichtung 16 wird erreicht, dass durch die aperturteilende Optik des ersten Mikrolinsen-Arrays 18 die von den Punktlichtquellen 14 emittierten Lichtstrahlen 36 in dem Raumwinkel aufgenommen werden, der der numerischen Appertur der Mikrolinsen 20 des ersten Mikrolinsen-Arrays 18 entspricht. Dabei werden die Punktlichtquellen 14 von den vor ihnen positionierten Mikrolinsen 20 des ersten Mikrolinsen-Arrays 18 in die zugeordneten Mikrolinsen 22 des zweiten Mikrolinsen-Arrays 24 abgebildet. Durch die zu den Abständen x zwischen den Punktlichtquellen 14 unterschiedlich ausgebildeten Abständen y zwischen den optischen Achsen der Mikrolinsen 20 des ersten Mikrolinsen-Arrays 18 wird erreicht, dass die Punktlichtquellen 14 nur von den diesen jeweils zugeordneten Mikrolinsen 22 des zweiten Mikrolinsen-Arrays 24 gerichtet abgebildet werden. Hierdurch stellt das zweite Mikrolinsen-Array 24 eine Leuchtfläche dar, die eine Abstrahl-Charakteristik mit einer durch das optische Design der Mikrolinsen 22 des zweiten Mikrolinsen-Arrays 24 gezielt bestimmten Winkelabstrahl-Charakteristik besitzt, so dass die Mikrolinsen 20 des ersten Mikrolinsen-Arrays 18 bezüglich des zweiten Mikrolinsen-Arrays 24 als homogen ausgeleuchtet erscheinen.

Durch die Mikrolinsen 22 des zweiten Mikrolinsen-Arrays 24 werden wiederum die homogen ausgeleuchteten, zugeordneten Mikrolinsen 20 des ersten Mikrolinsen-Arrays 18 in die Feldlinse 26 abgebildet, wodurch in der Feldlinse 26 eine gute Lichtmischung erfolgt und das Licht im optimalen Öffnungswinkel in der Vorlage 28 auftritt und die Vorlage 28 vollständig ausleuchtet. Dabei bewirkt die unterschiedliche Rasterung der Abstände x zwischen den Punktlichtquellen 14 und der Abstände y und z zwischen den optischen Achsen der Mikrolinsen 20 und 22 der beiden Mikrolinsen-Arrays 18 und 24 eine vollständige Überlagerung der übertragenen Lichtleistung der Punktlichtquellen 14 in der Vorlage 28. Die Feldlinse 26 bildet dabei die gerichtet emittierenden Flächen des zweiten Mikrolinsen-Arrays 24 in die Eintrittspupille des Abbildungsobjektivs 32 vollständig ab, so dass in dieser ein scharfes Bild der Lichtquelle 12 erscheint.

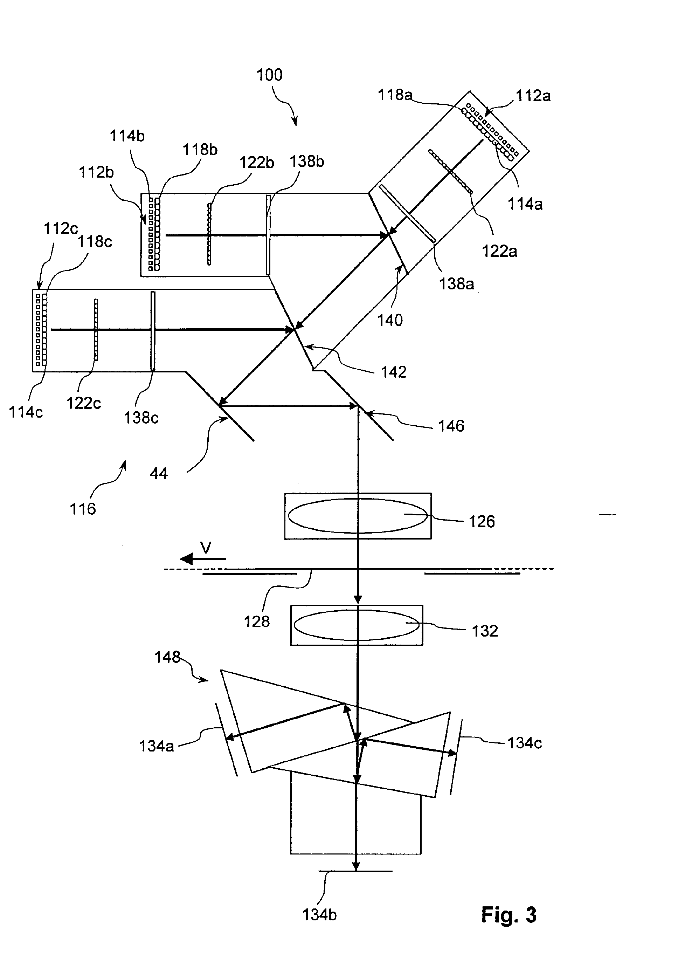

Fig. 3 zeigt ein zweites Ausführungsbeispiel einer erfindungsgemäßen Vorrichtung 100, die auf demselben zuvor beschriebenen Grundprinzip basiert.

Die Vorrichtung 100 weist jedoch insgesamt drei Lichtquellen 112a, 112b und 112c auf, die jeweils aus einer Vielzahl Punktlichtquellen 114a, 114b, 114c gebildet sind, jedoch Licht unterschiedlicher Wellenlängen abstrahlen. So erzeugt die Lichtquelle 112a blaues Licht mit Wellenlängen in einem Bereich von etwa 420 bis 510 nm, während die Lichtquelle 112b grünes Licht mit Wellenlängen in einem Bereich von etwa 510 bis 585 nm und die Lichtquelle 112c rotes Licht mit Wellenlängen in einem Bereich von etwa 585 bis 780 nm ausstrahlt. Jeder Lichtquelle 112a, 112b bzw. 112c ist jeweils ein erstes Mikrolinsen-Array 118a, 118b bzw. 118c sowie ein zweites Mikrolinsen-Array 122a, 122b bzw. 122c einer optischen Einrichtung 116 zugeordnet, wobei die Anordnung der Lichtquellen 112a, 112b bzw. 112c und der Mikrolinsen-Arrays 118a, 118b und 118c sowie 122a, 122b und 122c der zuvor unter Bezugnahme auf die Fig. 1 und 2 beschriebenen Anordnung entspricht.

Die von der ersten Lichtquelle 112a abgegebene blaue Lichtstrahlung wird auf ein erstes Filter 138a weitergeleitet, das bestimmte Spektralbereiche des Lichtes absorbiert, die nicht zum benötigten blauen Spektralbereich gehören. Das von der zweiten Lichtquelle 112b abgegebene grüne Licht wird auf ein zweites Filter 138b gelenkt, das bestimmte Wellenlängenbereiche absorbiert, die nicht zum benötigten grünen Wellenlängenbereich gehören. Die von der dritten Lichtquelle 112c emittierte rote Lichtstrahlung wird auf ein drittes Filter 138c geleitet, das bestimmte Wellenlängenbereiche absorbiert, welche nicht zum benötigten roten Wellenlängenbereich gehören.

Die von dem ersten Filter 138a durchgelassene Lichtstrahlung trifft anschließend auf einen ersten dichroitischen Strahlenkombinierer 140, der die blaue Lichtstrahlung mit der von dem zweiten Filter 138b durchgelassenen grünen Lichtstrahlung kombiniert, die ebenfalls auf den ersten dichroitischen Strahlenkombinierer 140 gerichtet ist. Die kombinierte blaue und grüne Lichtstrahlung wird anschließend auf einen zweiten dichroitischen Strahlenkombinierer 142 weitergeleitet, der die kombinierte blaue und grüne Lichtstrahlung mit der von dem dritten Filter 138c durchgelassenen roten Lichtstrahlung kombiniert, die gleichfalls auf den zweiten dichroitischen Strahlenkombinierer 142 gerichtet ist.

Das vollständig kombinierte mehrfarbige Licht in den Farben Blau, Grün und Rot wird anschließend von einem ersten Reflektor 144 auf einen zweiten Reflektor 146 geleitet, und von dem zweiten Reflektor 146 auf eine Feldlinse 126 gelenkt. Mit Hilfe einer nicht dargestellten Steuerung, die mit den Lichtquellen 112a, 112b und 112c verbunden ist, kann die Ausgabe des Lichtes jeweils gesteuert werden.

Das von dem zweiten Reflektor 146 abgestrahlte Licht wird über die Feldlinse 126 auf die abzutastende Bildvorlage 128 geleitet, welche intermittierend an der Feldlinse 126 vorbeigeführt wird, wie durch den Pfeil V angedeutet ist.

Das durch die abzutastende Vorlage 128 hindurchtretende Licht wird auf das Abbildungsobjektiv 132 und anschließend auf eine Prismenoptik 148 geleitet. Die Prismenoptik 148 spaltet das auf sie fallende Licht in die Farbbestandteile in den drei Grundfarben Blau, Grün und Rot auf. Der blaue Farbanteil des Lichtes wird von der Prismenoptik 148 auf eine erste lichtempfangende Anordnung 134a, der grüne Farbanteil des Lichtes auf eine zweite lichtempfindliche Anordnung 134b und der rote Farbanteil des Lichtes auf eine dritte lichtempfangende Anordnung 134c umgelenkt. Die drei lichtempfangende Anordnungen 134a, 134b und 134c stellen einen Lichtdetektor zum Detektieren von Licht dar, mit dem die Vorlage 128 belichtet wurde. Mittels der drei lichtempfangenden Anordnungen 134a, 134b und 134c werden die Bildinformationen, die in der abgetasteten Vorlage 128 des Bildes enthalten sind, hoch aufgelöst ermittelt und an eine nicht dargestellte Steuerung übertragen.

Auch bei diesem zweiten Ausführungsbeispiel wird durch die Kombination der beiden Mikrolinsen-Arrays 118a und 122a, 118b und 122b bzw. 118c und 122c mit den diesen jeweils zugeordneten Lichtquellen 112a, 112b bzw. 112c die zuvor beschriebene Wirkung erreicht, dass die Feldlinse 126 vollflächig ausgeleuchtet wird, so dass die Vorlage 128 mit einem homogenen Licht auf die lichtempfindlichen Anordnungen 134a, 134b und 134c aufbelichtet werden kann.

Hierzu 3 Blatt Zeichnungen

## Patentansprüche

1. Vorrichtung zum Aufbelichten einer Vorlage eines Bildes auf eine lichtempfangende Anordnung (34, 134) oder ein lichtempfindliches Material, mit mindestens einer Lichtquelle (12, 112) aus einer Vielzahl Punktlichtquellen (14, 114) zum Generieren von Lichtstrahlen (36, 136), welche zum Abbilden des Bildes entlang einer optischen Hauptachse (A) durch die Vorlage (28, 128) verlaufen,
einer Abbildungsoptik (32, 132) zum Projizieren der die Vorlage (28, 128) abbildenden Lichtstrahlen (36, 136) auf die lichtempfangende Anordnung (34, 134) oder das lichtempfindliche Material und
einer zwischen der Lichtquelle (12, 112 ) und der Vorlage (28, 128) angeordneten optischen Einrichtung (16, 116) zum homogenen Ausleuchten der Vorlage (28, 128),
**dadurch gekennzeichnet, dass** die optische Einrichtung (16, 116) in Abstrahlrichtung der Punktlichtquellen (14, 114) gesehen entlang der optischen Hauptachse (A) angeordnet ein erstes Mikrolinsen-Array (18, 118), ein diesem nachgeordnetes zweites Mikrolinsen-Array (24, 122) sowie eine zwischen dem zweiten Mikrolinsen-Array (24, 122) und der Vorlage (28, 128) angeordnete Feldlinse (26, 126) aufweist.

2. Vorrichtung nach Anspruch 1, **dadurch gekennzeichnet, dass** die Anzahl der Punktlichtquellen (14, 114) der Anzahl der Mikrolinsen (20, 120) des ersten Mikrolinsen-Arrays (18, 118) und der Anzahl der Mikrolinsen (22, 124) des zweiten Mikrolinsen-Arrays (24, 122) entspricht und dass jeder Punktlichtquelle (14, 114) eine der Mikrolinsen (20, 120) des ersten Mikrolinsen-Arrays (18, 118) und eine der Mikrolinsen (22, 124) des zweiten Mikrolinsen-Arrays (24, 122) zugeordnet ist.

3. Vorrichtung nach Anspruch 2, **dadurch gekennzeichnet, dass** der Abstand (x) der optischen Achsen jeweils benachbarter Punktlichtquellen (14, 114) größer ist als der Abstand (y) der optischen Achsen der diesen Punktlichtquellen (14, 114) jeweils zugeordneten Mikrolinsen (20, 120) des ersten Mikrolinsen-Arrays (18, 118).

4. Vorrichtung nach Anspruch 2 oder 3, **dadurch gekennzeichnet, dass** der Abstand (y) der optischen Achsen jeweils benachbarter Mikrolinsen (20, 120) der ersten Mikrolinsen-Arrays (18, 118) größer ist als der Abstand (z) der optischen Achsen der diesen Mikrolinsen (20, 120) jeweils zugeordneten Mikrolinsen (22, 124) des zweiten Mikrolinsen-Arrays (24, 122).

5. Vorrichtung nach einem der Ansprüche 2 bis 4, **dadurch gekennzeichnet, dass** der Abstand (E) des ersten Mikrolinsen-Arrays (18, 118) zu den Punktlichtquellen (14, 114), die Brennweiten der Mikrolinsen (20, 120) des ersten Mikrolinsen-Arrays (18, 118) sowie der Abstand (F) des zweiten Mikrolinsen-Arrays (24, 122) zum ersten Mikrolinsen-Array (18, 118) so gewählt sind, dass jede Punktlichtquelle (14, 114) die dieser jeweils zugeordnete Mikrolinse (22, 124) des zweiten Mikrolinsen-Arrays (24, 122) vollflächig ausleuchtet.

6. Vorrichtung nach einem der vorhergehenden Ansprüche, **dadurch gekennzeichnet, dass** der Abstand (G) des zweiten Mikrolinsen-Arrays (24, 122) zur Eintrittspupille der Feldlinse (26, 126) bzw. zur Vorlage (30) so gewählt ist, dass sich die von den Mikrolinsen (22, 124) des zweiten Mikrolinsen-Arrays (24, 122) auf die Eintrittspupille der Feldlinse (26, 126) abzubildenden Mikrolinsen (20, 120) des ersten Mikrolinsen-Arrays (18, 118) in der Eintrittspupille der Feldlinse (26, 126) bzw. in der Vorlagenebene (30) vollständig überlagern.

7. Vorrichtung nach einem der vorhergehenden Ansprüche, **dadurch gekennzeichnet, dass** die Lichtquelle aus Punktlichtquellen ein LED-Array (12, 112) mit einer Vielzahl vorzugsweise flächenmäßig in einer Ebene angeordneter LEDs (14, 114) oder ein Laserdioden-Array ist.

8. Vorrichtung nach einem der vorhergehenden Ansprüche, **dadurch gekennzeichnet, dass** mindestens eine weitere Lichtquelle (112a, 112b, 112c) aus einer Vielzahl Punktlichtquellen (114a, 114b, 114c) vorgesehen ist, dass die optische Einrichtung (116) für die weitere Lichtquelle (112a, 112b, 112c) ein erstes Mikrolinsen-Array (118a, 118b, 118c) und ein zweites Mikrolinsen-Array (122a, 122b, 122c) aufweist und dass die optische Einrichtung (116) eine optische Ablenkeinrichtung (140, 142, 144, 146) aufweist, welche die von zweiten Mikrolinsen-Arrays (122a, 122b, 122c) der beiden Lichtquellen (112a, 112b, 112c) abgestrahlten Lichtstrahlen in die Eintrittspupille der Feldlinse (126) lenkt.

9. Vorrichtung nach Anspruch 8, **dadurch gekennzeichnet, dass** die Ablenkungseinrichtung mindestens einen Strahlenkombinierer (140, 142) zum Kombinieren der von den beiden Lichtquellen (112a, 112b, 122c) emittierten Lichtstrahlen sowie mindestens einen Reflektor (144, 146) zum Umlenken der von dem Strahlenkombinierer (140, 142) kombinierten Lichtstrahlen in der Feldlinse (126) aufweist.

10. Vorrichtung nach Anspruch 8 oder 9, **dadurch gekennzeichnet, dass** insgesamt drei Lichtquellen (112a, 112b, 112c) aus einer Vielzahl Punktlichtquellen mit jeweils zugeordneten ersten und zweiten Mikrolinsen-Arrays (118a, 118b, 118c, 122a, 122b, 122c) vorgesehen sind, wobei die erste Lichtquelle (112a) blaues Licht mit Wellenlängen in einem Bereich von etwa 420 bis 510 nm, die zweite Lichtquelle (112b) grünes Licht mit Wellenlängen in einem Bereich von etwa 510 bis 585 nm und die dritte Lichtquelle (112c) rotes Licht mit Wellenlängen in einem Bereich von etwa 585 bis 780 nm äusstrahlen.

11. Vorrichtung nach Anspruch 8, 9 oder 10, **dadurch gekennzeichnet, dass** in Abstrahlrichtung der Lichtquellen (112a, 112b, 112c) zwischen dem zweiten Mikrolinsen-Array (122a, 122b, 122c) und der optische Ablenkungseinrichtung (140, 142, 144, 146) jeweils eine Filteranordnung (138a, 138b, 138c) zum Ausfiltern vorgegebener Wellenlängenbereiche angeordnet ist.

12. Vorrichtung nach einem der vorhergehenden Ansprüche, **dadurch kennzeichnet, dass** in Strahlrichtung der Abbildungsoptik (132) nachgeordnet eine Prismenoptik (148) vorgesehen ist, welche das auf sie geleitete Licht in die Farbbestandteile der drei Grundfarben Blau, Grün und Rot aufspaltet, und dass für jede Grundfarbe eine eigene lichtempfindliche Anordnung (134a, 134b, 134c) vorgesehen ist.

13. Vorrichtung nach einem der vorhergehenden Ansprüche, **dadurch gekennzeichnet, dass** die lichtempfindliche Anordnung ein CCD-Array (34, 134) ist.

14. Vorrichtung nach einem der vorhergehenden Ansprüche, **dadurch gekennzeichnet, dass** die Abbildungsoptik ein telezentrisches Objektiv (32, 132) ist.

15. Vorrichtung nach einem der vorhergehenden Ansprüche, **dadurch gekennzeichnet, dass** die lichtempfangende Anordnung (34, 134) eine Projektionsfläche ist.
